# EUROPÄISCHE PATENTSCHRIFT

(11) **EP 1 454 429 B1**
(45) Veröffentlichungstag und Bekanntmachung des Hinweises auf die Patenterteilung: **10.01.2007**
(21) Anmeldenummer: 02774337.6
(22) Anmeldetag: 12.09.2002
(51) Int. Cl.: H04B 7/26, B60R 16/02, H04L 12/40, G06F 11/00

(54) **SCHNITTSTELLENBAUSTEIN IN EINEM FAHRZEUG**
INTERFACE COMPONENT IN A VEHICLE
MODULE INTERFACE DANS UN VEHICULE

(30) Priorität: 30.11.2001 DE 10158988
(43) Veröffentlichungstag der Anmeldung: 08.09.2004
(73) Patentinhaber: ROBERT BOSCH GMBH, 70442 Stuttgart (DE)
(72) Erfinder: ROSEBROCK, Ralf, 30880 Laatzen (DE)
(86) Internationale Anmeldenummer: PCT/DE2002/003389
(87) Internationale Veröffentlichungsnummer: WO 2003/049325

(56) Entgegenhaltungen:
- EP-A- 1 058 220
- WO-A-00/60842
- US-A- 4 390 750
- US-A- 5 923 731

## Beschreibung

### Stand der Technik

Die Erfindung geht aus von einem Schnittsellenbaustein in einem Fahrzeug nach der Gattung des unabhängigen Patentanspruchs.

Aus der Patentschrift US-573074A geht ein Schnittstellenbaustein hervor, der ein Fahrzeug über eine Funkschnittstelle über das Internet mit einem Rchner verbindet. Die Funkschnittstelle ist fahrzeugseitig mit Fahrzeugkomponenten verbunden und kann zur Überwachung von den Fahrzeugkomponenten verwendet werden.

### Vorteile der Erfindung

Der erfindungsgemäbe Schnittstellenbaustein in einem Fahrzeug mit den Merkmalen des unabhängigen Patentanspruchs hat demgegenüber den Vorteil, dass dem Schnittstellenbaustein bei der Überwachung der Komponenten die Funktion eines Watchdogs zugeordnet wird. Dabei wird ein Funktionssignal, das aussagt, dass die Komponenten, die überwacht werden, ordnungsgemäß funktionieren, in vorgegebenen Zeitabständen wiederholt erzeugt und über die Funkschnittstelle und das Internet, also ein

WO 00/60842 A zeigt eine mobile Einheit, welche über ein Funknetz bzw. eine Funkstrecke mit einer Zentrale verbunden ist. Die Funkschnittstelle dient dabei primär dazu, von der Zentrale Informationen aus dem Fahrzeug abzurufen. In einer Ausführung ist vorgesehen, dass in der mobilen Einheit MC auch selbständige Alarmmeldungen bei Eintritt von bestimmten Störereignissen wie
Grenzwertüberschreitungen erfolgen. Es wird also eine Vorgehensweise gezeigt, welche bei Störfällen im Fahrzeug eine entsprechende Meldung an die Zentrale abgibt. In diesem Fall wird also gesteuert durch ein Störereignis eine Alarmmeldungen bezüglich des Störereignisses ausgesendet.

US-Patent 4 390 750 zeigt eine Vorgehensweise zur Überwachung einer Telefonanlage. Dabei ist ein zusätzliches Gerät vorgesehen, welches periodisch die Telefonleitung mit Signalen beaufschlagt, die ein abgenommenes Telefon darstellen. In der Zentrale wird dieses Signal erkannt und bei Auftreten dieses Signals davon ausgegangen, dass die Telefonleitung in Ordnung ist, andererseits beim Ausfall eines entsprechenden Signals ein Fehler in der Telefonleitung vorhanden ist. Hier wird also Vorgehensweise beschrieben, nach der auf eine Leitung periodisch ein Testimpuls gesendet wird, dessen Vorhandensein in einer entfernteren Zentrale als Leitungsüberprüfung registriert wird.

### Vorteile der Erfindung

Der erfindungsgemäße Schnittstellenbaustein in einem Fahrzeug mit den Merkmalen des unabhängigen Patentanspruchs hat demgegenüber den Vorteil, dass dem Schnittstellenbaustein bei der Überwachung der Komponenten die Funktion eines Watchdogs zugeordnet wird. Dabei wird ein Funktionssignal, das aussagt, dass die Komponenten, die überwacht werden, ordnungsgemäß funktionieren, in vorgegebenen Zeitabständen wiederholt erzeugt und über die Funkschnittstelle und das Internet, also ein Kommunikationsnetz, versendet, um dann bei einem Rechner gesammelt zu werden. Insbesondere bei Fahrzeugen des öffentlichen Personennahverkehrs ist so ein Flottenmanagement im Bezug auf die Überwachung der Funktionsfähigkeit der einzelnen Komponenten möglich.

Durch die in den abhängigen Ansprüchen aufgeführten Maßnahmen und Weiterbildungen sind vorteilhafte Verbesserungen des im unabhängigen Patentanspruch angegebenen Schnittstellenbausteins in einem Fahrzeug möglich.

Besonders vorteilhaft ist, dass wenn kein Funktionssignal erzeugt werden kann, da eine Komponente bei einem Test ein fehlerhaftes Verhalten zeigt, der Prozessor des Schnittstellenbausteins einen Neustart der betreffenden Komponente veranlasst, um auf diese Weise möglicherweise den Fehler zu beheben. Vorteilhafterweise kann dieser Neustart durch das Schalten eines Leistungsschalters veranlasst werden, der die Energiezufuhr zu der betreffenden Komponente ausschaltet und wieder einschaltet. Als ein solcher Leistungsschalter ist beispielsweise ein Relais verwendbar.

Weiterhin ist es von Vorteil, dass die Komponenten zu einem Infotainmentsystem gehören, das in einem Fahrzeug des öffentlichen Personennahverkehrs angeordnet ist. Hier ist insbesondere die Watchdog-Funktion von Vorteil, da die Personen, die sich die Infotainmentkomponenten im Fahrzeug ansehen, diese nicht bedienen können, sondern es läuft ein vorgegebenes Programm ab. Daher ist ein Neustart durch einen Benutzer hier nicht möglich, so dass der erfindungsgemäße Schnittstellenbaustein hier Abhilfe schafft.

Durch die Verwendung von Halbleiterspeichern im erfindungsgemäßen Schnittstellenbaustein ist es möglich, auch drehende Teile wie eine Festplatte zu verzichten. Dies ermöglicht größere Freiheitsgrade beim Einbau und der Belastbarkeit des erfindungsgemäßen Schnittstellenbausteins.

Schließlich ist es auch von Vorteil, dass die Komponenten in dem Fahrzeug mit dem Schnittstellenbaustein über einen Bus, beispielsweise einen CAN-Bus, verbunden sind. Alle angeschlossenen Komponenten weisen dann einen Buscontroller auf.

### Zeichnung

Ausführungsbeispiele der Erfindung sind in der Zeichnung dargestellt und werden in der nachfolgenden Beschreibung näher erläutert. Es zeigen
Figur 1 ein Blockschaltbild der erfindungsgemäßen Vorrichtung im Fahrzeug,
Figur 2 ein Fahrzeug mit der erfindungsgemäßen Vorrichtung, das über Funk mit einer Basisstation verbunden ist und
Figur 3 ein Flussdiagramm des Verfahrens, das im erfindungsgemäßen Schnittstellenbaustein abläuft.

### Beschreibung der Ausführungsbeispiele

In immer mehr Fahrzeugen werden Multimedia- und Infotainmentsysteme für Fahrgastunterhaltung und - information eingebaut. Dies trifft insbesondere auf Pkw, Flugzeuge, Busse und Bahnen zu. In diesem Bereich werden auch verstärkt relativ kostengünstige Systeme eingesetzt, deren Systemarchitekturen aus dem Desktop- und Serverbereich der Industrieautomatisierung und der Telekommunikation abgeleitet sind. Dies betrifft sowohl die verwendeten Rechnerarchitekturen als auch die eingesetzten Betriebssysteme.

Erfindungsgemäß soll nun eine Vorrichtung geschaffen werden, die die vorhandenen Multimedia- und Infotainmentsysteme überwacht, steuert und mögliche Ausfallzeiten reduzieren hilft, sowie bessere Diagnosemöglichkeiten schafft. Insbesondere können so auch kritische Boot-, Shutdown- und Resetvorgängen der Komponenten überwacht und gesteuert werden.

Der zur Geräteüberwachung eingesetzte Schnittstellenbaustein muss sich durch eine sehr hohe Zuverlässigkeit auszeichnen. Die zu überwachenden Komponenten sind dagegen oftmals aufgrund der Komplexität der eingesetzten Hardware, der Betriebssystem- und Softwarekomponenten nicht mit der gleichen Zuverlässigkeit vorhanden. Der erfindungsgemäße Schnittstellenbaustein erfüllt folgende Anforderungen:

Er ist platzsparend, zum Beispiel auch geeignet für C-beziehungsweise Hutschienenmontage in Bahnen oder als tragbares Service- und Diagnosegerät mit Akku. Er ist kostengünstig und besonders ausfallsicher, sowie durch einen geringeren Leistungsbedarf gekennzeichnet.

Damit ist es dann möglich, Geräte zu steuern, zu überwachen, Diagnosedaten zu sammeln und auf Fehlerzustände direkt oder automatisch zu reagieren.

Die automatische Überwachung der Komponenten durch ein Funktionssignal in dem Schnittstellenbaustein entspricht einer Watchdog-Funktion. Das Funktionssignal wird durch die Komponenten nur dann erzeugt und über eine bestehende Kommunikationsverbindung gesendet, wenn alle wichtigen Applikationen ordnungsgemäß ablaufen. Die Applikationen laufen auf den einzelnen Komponenten. Sollte das Funktionssignal nach einer konfigurierbaren Zeitspanne nicht eintreffen, ist es Aufgabe des Schnittstellenbausteins, einen Neustart der Komponente auszulösen. Dies kann beispielsweise durch die Ansteuerung eines Relais über einen Leistungsausgang realisiert werden.

Die Überwachungsfunktionalität ist besonders sinnvoll in Bussen und Bahnen mit eingebauten Infotainmentsystemen einzusetzen, wo die Fahrgäste keinen direkten Zugang zu einem Power-On-, Power-Off- oder Reset-Schalter haben und auch das Fahrzeugpersonal während der Fahrt nicht für das Wiederanlaufen des Infotainmentsystems sorgen kann. Durch den Schnittstellenbaustein lässt sich die Überwachung einfach über LAN oder W-LAN oder Mobilfunk an ein Intranet oder das Internet als das Kommunikationsnetz anbinden. Bei einer funkbasierten Verbindung lassen sich so auch problemlos fahrende Fahrzeuge erreichen. Die Anwender, also Entwickler, Feldtester, Servicetechniker, Mitarbeiter von Verkehrsbetrieben, können interaktiv auf die im Schnittstellenbaustein gespeicherten Daten zugreifen und je nach Konfiguration weitere Daten von den Applikationseinheiten anfordern.

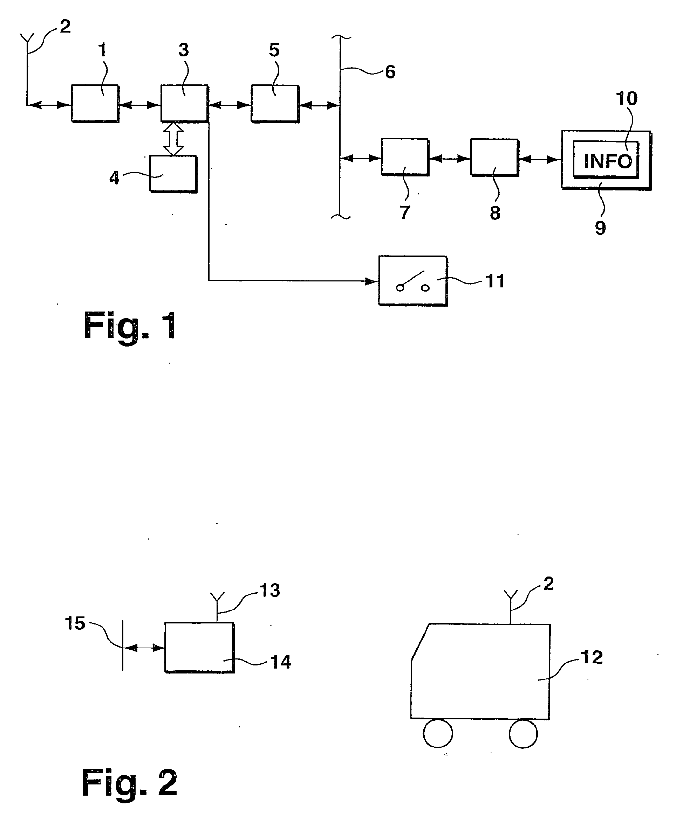

Figur 1 zeigt als Blockschaltbild die erfindungsgemäße Vorrichtung. Eine Antenne 2 ist an einen Ein-/Ausgang einer Sende-/Empfangsstation 1 angeschlossen. Die Sende/Empfangsstation 1 ist über einen Datenein-/-ausgang mit einem Prozessor 3 verbunden, der über seinen zweiten Datenein-/-ausgang mit einem Speicher 4 verbunden ist. Über einen dritten Datenein-/-ausgang ist der Prozessor 3 an einen Buscontroller 5 angeschlossen und über einen Datenausgang an einen Leistungsschalter 11. Der Buscontroller 5 ist über seinen zweiten Datenein-/-ausgang mit einem Bus 6 verbunden. Beim Bus 6 kann es sich hier um einen CAN-Bus handeln. Ein Buscontroller 7 ist auch.über einen Datenein-/-ausgang an den Bus 6 angekoppelt. Am zweiten Datenein-/-ausgang ist der Buscontroller 7 an eine Ansteuerung 8 angeschlossen, die wiederum über einen Datenein-/-ausgang an eine Anzeige 9 mit einem Anzeigenfeld 10 angeschlossen ist.

Der Schnittstellenbaustein wird aus der Antenne 2 der Sende-/Empfangsstation 1, dem Prozessor 3 und dem Speicher 4 gebildet. Der Prozessor 3 sorgt dafür, dass über den Bus 6 zu vorgegebenen Zeitpunkten Funktionsüberprüfungen der an den Bus 6 angeschlossenen Komponenten, wie der Anzeige 9, durchgeführt werden. Die Komponenten, die an den Bus 6 angeschlossen sind, senden ihre Ergebnisse auf den Funktionstest zu dem Schnittstellenbaustein zurück, so dass dann der Schnittstellenbaustein erkennt, ob alle Komponenten fehlerfrei arbeiten. Ist das der Fall, dann wird durch den Prozessor 3 ein Funktionssignal erzeugt, das dann über die Sende-/Empfangsstation 1 und die Antenne 2 versendet wird. Wurde jedoch ein Fehler erkannt, dann schaltet der Prozessor 3 den Leistungsschalter 11, der die Stromversorgung zu der Anzeige 9 unterbricht beziehungsweise schließt. Durch ein Ein-/Ausschalten des Schalters 11 gelingt ein Neustart der Anzeige 9. Jeder Komponente kann dabei ein Leistungsschalter zugeordnet sein oder es können Schalter für Gruppen von Komponenten vorhanden sein. Anstatt eines Leistungsschalters kann auch ein Befehl über den Bus 6 von dem Prozessor 3 versendet werden, dass die Ansteuerung 8 und die Anzeige 9 einen Neustart durchzuführen haben. Dadurch wird also ein Softwarebefehl induzierter Neustart erzeugt.

Anstatt eines Busses kann auch ein LAN, W-LAN, Mobilfunk, serielle oder parallel Schnittstellen beziehungsweise Zweidrahtleitungen zu den einzelnen Komponenten verwendet werden. Für die Funkschnittstelle, die durch die Antenne 2 und die Sende-/Empfangsstation 1 realisiert wird, sind verschiedene Kommunikationsmöglichkeiten gegeben. Auch hier kann ein drahtloses LAN, W-LAN, Mobilfunk oder Funkübertragungssystemen verwendet werden. Es ist auch möglich, an bestimmten Haltestellen eine kontaktgebundene Kommunikation zwischen dem Schnittstellenbaustein und dem Kommunikationsnetz herzustellen.

In Figur 2 ist dargestellt, wie ein Fahrzeug mit dem erfindungsgemäßen Schnittstellenbaustein und der Antenne 2 über einen Funkkanal mit einer Basisstation 14 und der Antenne 13 verbunden ist, wobei die Basisstation 14 dann die Verbindung zum Internet 15 herstellt.

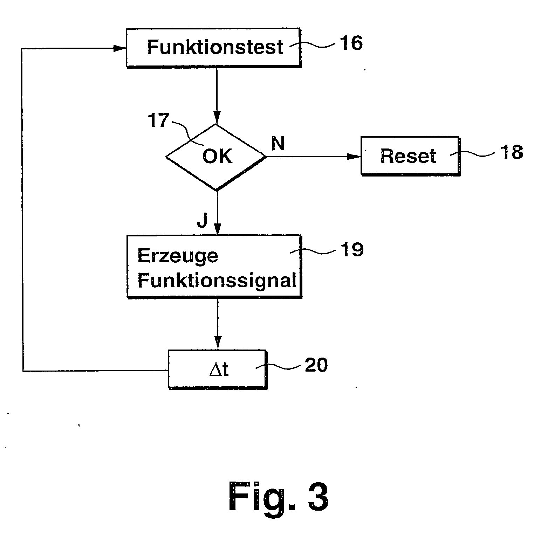

In Figur 3 ist als ein Flussdiagramm der Ablauf auf dem erfindungsgemäßen Schnittstellenbaustein dargelegt. In Verfahrensschritt 16 erfolgt der Funktionstest der einzelnen Komponenten, wie der Anzeige 9 mit ihrer Ansteuerung 8, durch den Prozessor 3 des Schnittstellenbausteins über den Bus 6. Wurde von dem Schnittstellenbaustein erkannt, dass dieser Test fehlerhaft ablief, dann werden die betreffenden Komponenten oder die betreffende Komponente über den Leistungsschalter 11 zu einem Neustart gezwungen. Dies erfolgt in Verfahrensschritt 18. Alternativ kann bei einem fehlerhaften Test zunächst ein Reset-Signal an die betreffenden Komponenten übermittelt werden, um einen Warmstart auszulösen, beispielsweise über eine CAN-Bus-Verbindung. Wenn die betreffenden Komponenten nach dem Reset immer noch nicht korrekt funktionieren, dann wird über den Leistungsschalter ein Neustart erzwungen, was allgemein als Kaltstart bekannt ist.

Wurde jedoch in Verfahrensschritt 17 erkannt, dass der Funktionstest wiedergibt, dass eine ordnungsgemäße Funktion aller Komponenten gegeben ist, erzeugt der Prozessor 3 ein Funktionssignal, das über die Sende-/Empfangsstation 1 und die Antenne 2 an eine Basisstation 14 mit ihrer Antenne 13 übertragen wird, um es dann über das Internet 15 zu einem Rechner zu übertragen und so zu dokumentieren, dass die Komponenten in dem betreffenden Fahrzeug 12 ordnungsgemäß funktionieren. Nach einer Zeit □t, hier wie in Verfahrensschritt 20, wird der Funktionstest im Verfahrensschritt 16 wiederholt.

## Patentansprüche

1. Schnittstetienbaustein für ein Fahrzeug (12), wobei der Schnittstellenbaustein einen Prozessor (3) und einen Speicher (4) aufweist und mit Komponenten (8, 9) im Fahrzeug verbunden ist, wobei der Schnittstellenbaustein eine Funkschnittstelle (1, 2) zur Ankopplung an ein externes Kommunikationsnetz (15) aufweist, wobei der Prozessor (3) Mittel aufweist, die die Komponenten (8,9) auf Funktionsfähigkeit überwachen, **dadurch gekennzeichnet, dass** der Prozessor (3) derart ausgestaltet ist, dass in vorgegebenen Zeitabständen ein Signal erzeugt und über die Funkschnittstelle (1, 2) versendet wird, solange die Komponenten fehlerfrei arbeiten.

2. Schnittstellenbaustein nach Anspruch 1, **dadurch gekennzeichnet, dass** der Prozessor (3) einen Neustart der betreffenden Komponente veranlasst, die nicht ordnungsgemäß funktioniert.

3. Schnittstellenbaustein nach Anspruch 2, **dadurch gekennzeichnet, dass** der Prozessor (3) einen Neustart durch Schalten eines Leistungsschalters (11) veranlasst.

4. Schnittstellenbaustein nach Anspruch 1, 2 oder 3, **dadurch gekennzeichnet, dass** die Komponenten zu einem Infotainmentsystem gehören.

5. Schnittstellenbaustein nach einem der vorhergehenden Ansprüche, **dadurch gekennzeichnet, dass** das Fahrzeug (12) für den öffentlichen Personennahverkehr ausgebildet ist.

6. Schnittstellenbaustein nach einem der vorhergehenden Ansprüche, **dadurch gekennzeichnet, dass** der Speicher (4) als Halbleiterspeicher ausgebildet ist.

7. Schnittstellenbaustein nach einem der vorhergehenden Ansprüche, **dadurch gekennzeichnet, dass** die Komponenten (8, 9) mit dem Schnittstellenbaustein (3, 4) über einen Bus (6) verbunden sind.

## Claims

1. Interface module for a vehicle (12), the interface module having a processor (3) and a memory (4) and being connected to components (8, 9) in the vehicle, the interface module having a radio interface (1, 2) for coupling to an external communications network (15), the processor (3) having means which monitor the functional capability of the components (8, 9), **characterized in that** the processor (3) is configured in such a way that a signal is generated at predefined time intervals and transmitted via the radio interface (1, 2) as long as the components are operating without faults.

2. Interface module according to Claim 1, **characterized in that** the processor (3) brings about a restart of the respective component which is not functioning correctly.

3. Interface module according to Claim 2, **characterized in that** the processor (3) brings about a restart by switching a power switch (11).

4. Interface module according to Claim 1, 2 or 3, **characterized in that** the components are associated with an infotainment system.

5. Interface module according to one of the preceding claims, **characterized in that** the vehicle (12) is designed for public local passenger transport.

6. Interface module according to one of the preceding claims, **characterized in that** the memory (4) is embodied as a semiconductor memory.

7. Interface module according to one of the preceding claims, **characterized in that** the components (8, 9) are connected to the interface module (3, 4) via a bus (6).

## Revendications

1. Module interface pour un véhicule (12), relié à des composants (8,9) dans le véhicule
comportant un processeur (3) et une mémoire (4) et possédant une interface radio (1, 2) pour couplage à un réseau de communication externe (15),
le processeur (3) comportant des moyens de surveillance des composants (8, 9) du point de vue de leur aptitude au fonctionnement,
**caractérisé en ce que**
le processeur (3) est configuré de telle manière qu'à des intervalles de temps prédéfinis, un signal est produit et émis par l'intermédiaire de l'interface radio (1, 2), aussi longtemps que les composants fonctionnent correctement.

2. Module interface selon la revendication 1,
**caractérisé en ce que**
le processeur (3) initie un redémarrage du composant qui ne fonctionne pas correctement.

3. Module interface selon la revendication 2,
**caractérisé en ce que**
le processeur (3) initie un redémarrage par déclenchement d'un disjoncteur (11).

4. Module interface selon la revendication 1, 2 ou 3,
**caractérisé en ce que**
les composants font partie d'un système d'infotainment.

5. Module interface selon l'une des revendications précédentes,
**caractérisé en ce que**
le véhicule (12) est conçu pour le transport en commun suburbain des personnes.

6. Module interface selon l'une des revendications précédentes,
**caractérisé en ce que**
la mémoire (4) est conçue comme une mémoire à semi-conducteurs.

7. Module interface selon l'une des revendications précédentes,
**caractérisé en ce que**
les composants (8, 9) sont reliés au module interface (3, 4) par l'intermédiaire d'un bus (6).
